# EUROPEAN PATENT APPLICATION

(11) **EP 4 835 597 A1**
(43) Date of publication of application: **04.11.2026**
(21) Application number: 24911239.2
(22) Date of filing: 25.12.2024
(51) Int. Cl.: G05B 23/02

(54) **DOMAIN CONTROLLER, VEHICLE CONTROL METHOD AND CONTROL SYSTEM, VEHICLE, AND STORAGE MEDIUM**

(30) Priority: 29.12.2023 CN 202311868261
(71) Applicant: BYD Company Limited, Shenzhen, Guangdong 518118 (CN)
(72) Inventor: ZHONG, Yilin, Shenzhen, Guangdong 518118 (CN); WANG, Wei, Shenzhen, Guangdong 518118 (CN); CHEN, Bin, Shenzhen, Guangdong 518118 (CN); SHENG, Hejiang, Shenzhen, Guangdong 518118 (CN); GUO, Hailong, Shenzhen, Guangdong 518118 (CN)
(74) Representative: Taor, Simon Edward William
(86) International application number: PCT/CN2024/142333
(87) International publication number: WO 2025/140316

(57) **Abstract**

A domain controller 110 is provided, used in a vehicle. The domain controller 110 is connected to an information acquisition unit 120 of the vehicle. The domain controller 110 is connected to a plurality of first controlled units 130 of the vehicle. The domain controller 110 is configured to: determine a first control signal based on first vehicle information acquired by the information acquisition unit 120, and send the first control signal to the plurality of first controlled units 130. The first control signal instructs the plurality of first controlled units 130 to perform corresponding operations.

## Description

### CROSS-REFERENCE TO RELATED APPLICATIONS

This application claims priority to and benefits of Patent Application No. 2023118682610 filed with the China National Intellectual Property Administration on December 29, 2023, which is incorporated herein by reference in its entirety.

### TECHNICAL FIELD

This application relates to the field of vehicle technologies, and in particular, to a domain controller, a control method for a vehicle, a control system for a vehicle, a vehicle, and a computer-readable storage medium.

### BACKGROUND

In a conventional E/E (Electrical/Electronic, electrical/electronic) architecture, a vehicle includes a plurality of ECUs (Electronic Control Unit, electronic control units) to implement different independent functions. For example, during vehicle braking, a plurality of ECUs may be required to respectively perform functions of vehicle state detection, target torque calculation, torque arbitration, and torque distribution. However, computing power of the vehicle is dispersed among the plurality of ECUs, resulting in low braking execution efficiency of the vehicle.

### SUMMARY

This application is intended to resolve at least one of the technical problems existing in the conventional technologies. To this end, this application provides a domain controller, a control method for a vehicle, a control system for a vehicle, a vehicle, and a computer-readable storage medium.

An embodiment of this application provides a domain controller, used in a vehicle, where the domain controller is connected to an information acquisition unit of the vehicle, and the domain controller is connected to a plurality of first controlled units of the vehicle; and
the domain controller is configured to: determine a first control signal based on first vehicle information acquired by the information acquisition unit, and send the first control signal to the plurality of first controlled units, where the first control signal instructs the plurality of first controlled units to perform corresponding operations.

The domain controller used in the vehicle provided in this embodiment of this application can determine the first control signal based on the first vehicle information acquired by the connected information acquisition unit, and send the first control signal to the plurality of first controlled units connected to the domain controller, to cause the first controlled units to perform the corresponding operations as instructed by the first control signal.

As such, according to this embodiment of this application, after the information acquisition unit in the vehicle acquires the first vehicle information such as vehicle deceleration information, the domain controller may determine the corresponding first control signal based on the first vehicle information of the information acquisition unit, to control, based on the first control signal, the plurality of first controlled units of the vehicle to perform the corresponding operations, for example, to cause braking-related components such as calipers, motors, and the like to perform corresponding operations. Therefore, a plurality of functions of the vehicle may all rely on the domain controller to perform corresponding data processing. For example, functions of vehicle state detection, target torque calculation, torque arbitration, and torque distribution during vehicle braking may be all performed by the domain controller, thereby centralizing computing power of the vehicle. According to this embodiment of this application, after the first control signal is sent to the plurality of first controlled units, any one of the plurality of first controlled units may perform a corresponding operation based on a function of the first controlled unit and the received first control signal. This allows the domain controller not to consider a receiver of the first control signal, thereby improving signal transmission efficiency of the domain controller to some extent, and consequently improving overall execution efficiency of the vehicle.

In some embodiments, the domain controller is connected to a plurality of second controlled units of the vehicle; and
the domain controller is configured to: determine a second control signal based on second vehicle information acquired by the plurality of second controlled units, and send the second control signal to the plurality of second controlled units, where the second control signal instructs the plurality of second controlled units to perform corresponding operations.

As such, according to these embodiments of this application, after receiving the second control signal, the second controlled units in the vehicle may perform the corresponding operations. Therefore, all data processing related to the second controlled units in the vehicle may be performed by the domain controller, allowing computing power of the domain controller to be fully leveraged.

In some embodiments, the first control signal includes torque control information.

In some embodiments, the first vehicle information includes current accelerator pedal position information, current operating mode information, current vehicle speed information, and current vehicle gear information; and the domain controller is configured to determine the torque control information based on the current accelerator pedal position information, the current operating mode information, the current vehicle speed information, and the current vehicle gear information, to obtain the first control signal.

As such, according to these embodiments of this application, drive control of the vehicle may be performed by the domain controller. In other words, after determining the torque control information based on the current accelerator pedal position information, the current operating mode information, the current vehicle speed information, and the current vehicle gear information that are acquired or detected by the first information acquisition unit to obtain the first control signal, the domain controller may send the first control signal to the first controlled units, to cause the first controlled units to perform the corresponding operations based on the first control signal. Consequently, the vehicle generates a corresponding driving force to accelerate.

In some embodiments, the domain controller is configured to:
determine the torque control information based on the current accelerator pedal position information, the current vehicle speed information, the current vehicle gear information, and a target mapping relationship, where the target torque mapping information is determined based on the current operating mode information and predetermined torque mapping information corresponding to each operating mode, and the torque mapping information includes a torque, and an accelerator pedal, a vehicle speed, and a vehicle gear torque that correspond to the torque.

As such, according to these embodiments of this application, after corresponding torque mapping information, namely, the target mapping information is determined based on the operating mode information, a corresponding torque may be determined based on the current accelerator pedal position information, the current vehicle speed information, and the current vehicle gear information, to obtain the torque control information. In this way, efficiency of obtaining the torque control information can be ensured.

In some embodiments, the first vehicle information includes current brake pedal position information, and the domain controller is configured to determine the torque control information based on a target braking torque, where the target braking torque is determined based on the current brake pedal position information.

As such, according to these embodiments of this application, after a user depresses a brake pedal to change a brake pedal position, the domain controller may further determine the target braking torque based on the current brake pedal position information, and generate the corresponding torque control information based on the target braking torque, to generate the corresponding first control signal. Then, after receiving the first control signal and obtaining the torque control information, the first controlled units may perform the corresponding operations, to cause the vehicle to generate the target braking torque. Consequently, a braking requirement of the user can be satisfied.

In some embodiments, the first vehicle information includes current battery state information and current drive motor state information, and the domain controller is configured to:
determine the torque control information based on the target braking torque and a current maximum braking torque, where the current maximum braking torque is determined based on the current battery state information and the current drive motor state information.

As such, according to these embodiments of this application, the domain controller may determine, based on the current drive motor state information, the current maximum braking torque that can be currently generated by the vehicle. Then, the domain controller may determine the corresponding torque control information based on the current maximum braking torque and the target braking torque. For example, the domain controller may determine the torque control information based on a smaller value between the current maximum braking torque and the target braking torque. Consequently, the torque control information can be determined more properly.

In some embodiments, the first vehicle information includes the current vehicle speed information, and the domain controller is configured to:
determine the torque control information based on the target braking torque, the current maximum braking torque, and a regenerative torque, where the regenerative torque is determined based on the current battery state information, the current drive motor state information, and the current vehicle speed information.

As such, according to these embodiments of this application, when determining the regenerative torque based on the current battery state information, the current drive motor state information, and the current vehicle speed information, that is, determining that the vehicle can perform battery energy regeneration during braking, the domain controller in the vehicle may determine the corresponding torque control information based on the target braking torque, the current maximum braking torque, and the regenerative torque, for example, generate the corresponding torque control information based on the regenerative torque, and the smaller value between the target braking torque and the current maximum braking torque. Consequently, after the first controlled units receive the first control signal, the vehicle may generate a braking torque corresponding to the smaller value, with the regenerative torque constituting a part of the braking torque. In this way, vehicle braking can be performed based on the regenerative torque.

In some embodiments, the first vehicle information includes current wheel speed information, and the domain controller is configured to determine the torque control information based on current slip information, where the current slip information is determined based on the current wheel speed information and vehicle speed information corresponding to the current wheel speed information.

As such, according to these embodiments of this application, the domain controller may further generate the corresponding torque control information and first control signal based on the current slip information that is determined based on the current wheel speed information and the current vehicle speed information. Then, the first controlled units that receive the first control signal and obtain the torque control information may perform the corresponding operations, for example, decelerating the vehicle. In this way, stable traveling of the vehicle can be ensured to some extent.

In some embodiments, the torque control information includes torque reduction information, the plurality of first controlled units include a drive motor, the first vehicle information includes a currently generated torque of the drive motor, and the domain controller is configured to: when the current slip information is that a vehicle slip ratio is higher than a preset value, determine torque reduction information of the drive motor based on the currently generated torque and the current slip information, to obtain the torque control information, where the drive motor is configured to reduce the currently generated torque based on the torque reduction information when the torque reduction information in the first control signal is obtained.

As such, according to these embodiments of this application, when the vehicle slip ratio is higher than the preset value, the domain controller may determine the corresponding torque reduction information and torque control information based on the currently generated torque of the drive motor. Then, when the domain controller sends the first control signal to the plurality of first controlled units and the drive motor receives the first control signal, the drive motor may obtain the torque reduction information based on the first control signal, and reduce the currently generated torque based on the torque reduction information. Consequently, a vehicle speed can be reduced, and the stable traveling of the vehicle can be ensured.

In some embodiments, the first vehicle information includes current vehicle steering information, and the domain controller is configured to determine the torque control information based on a vehicle steering angle, a vehicle steering torque, and a vehicle steering speed, where the vehicle steering angle, the vehicle steering torque, and the vehicle steering speed are determined based on the current vehicle steering information.

As such, according to these embodiments of this application, the domain controller may determine the corresponding torque control information based on the vehicle steering angle, the vehicle steering torque, and the vehicle steering speed that are determined based on the current vehicle steering information during steering of the vehicle, to cause the first controlled units in the vehicle to perform a vehicle steering operation based on the torque control information. Consequently, data processing during vehicle steering can be reliably or efficiently performed by the domain controller, and vehicle steering can be reliably performed.

In some embodiments, the torque control information includes torque adjustment information; the first vehicle information includes current wheel speed information, vehicle acceleration information, vehicle yaw angle information, and a currently generated torque of a drive motor; and the domain controller is configured to determine the torque adjustment information based on the vehicle steering angle, the vehicle steering torque, the vehicle steering speed, current slip information, current vehicle speed information, vehicle deviation information, and the currently generated torque, to obtain the torque control information, where the current slip information is determined based on the current wheel speed information, the vehicle deviation information is determined based on the vehicle acceleration information and the vehicle yaw angle information, and the drive motor is configured to: when the torque adjustment information in the first control signal is obtained, perform braking based on the torque adjustment information to align a forward direction of the vehicle with the vehicle steering angle.

As such, according to these embodiments of this application, the domain controller may further determine actual movement of the vehicle during steering based on the current slip information, the current vehicle speed information, the vehicle deviation information, and the currently generated torque, and determine the torque adjustment information based on a steering intention of the user, that is, the vehicle steering angle, the vehicle steering torque, and the vehicle steering speed. Then, after obtaining the torque adjustment information based on the first control signal, the first controlled units such as the drive motor may perform corresponding operations based on the torque adjustment information, to cause the actual movement of the vehicle to be consistent with the steering intention of the user, that is, to align the forward direction of the vehicle with the foregoing vehicle steering angle. In this way, lateral trajectory correction can be implemented.

An embodiment of this application provides a control method for a vehicle, where the vehicle is provided with the foregoing domain controller, and the method includes:
determining a first control signal based on first vehicle information acquired by the information acquisition unit; and
sending the first control signal to the plurality of first controlled units, where the first control signal instructs the plurality of first controlled units to perform corresponding operations.

As such, according to this embodiment of this application, after the information acquisition unit in the vehicle acquires the first vehicle information such as vehicle deceleration information, the domain controller may determine the corresponding first control signal based on the first vehicle information of the information acquisition unit, to control, based on the first control signal, the plurality of first controlled units of the vehicle to perform the corresponding operations, for example, to cause braking-related components such as calipers, motors, and the like to perform corresponding operations. Therefore, a plurality of functions of the vehicle may all rely on the domain controller to perform corresponding data processing. For example, functions of vehicle state detection, target torque calculation, torque arbitration, and torque distribution during vehicle braking may be all performed by the domain controller, thereby centralizing computing power of the vehicle. According to this embodiment of this application, after the first control signal is sent to the plurality of first controlled units, any one of the plurality of first controlled units may perform a corresponding operation based on a function of the first controlled unit and the received first control signal. This allows the domain controller not to consider a receiver of the first control signal, thereby improving signal transmission efficiency of the domain controller to some extent, and consequently improving overall execution efficiency of the vehicle.

In some embodiments, the domain controller is connected to a plurality of second controlled units of the vehicle, and the method further includes:
determining a second control signal based on second vehicle information acquired by the plurality of second controlled units; and
sending the second control signal to the plurality of second controlled units, where the second control signal instructs the plurality of second controlled units to perform corresponding operations.

As such, according to these embodiments of this application, after receiving the second control signal, the second controlled units in the vehicle may perform the corresponding operations. Therefore, all data processing related to the second controlled units in the vehicle may be performed by the domain controller, allowing computing power of the domain controller to be fully leveraged.

In some embodiments, the first control signal includes torque control information.

In some embodiments, the first vehicle information includes current accelerator pedal position information, current operating mode information, current vehicle speed information, and current vehicle gear information; and determining the first control signal based on the first vehicle information acquired by the information acquisition unit includes:
determining the torque control information based on the current accelerator pedal position information, the current operating mode information, the current vehicle speed information, and the current vehicle gear information.

As such, according to these embodiments of this application, drive control of the vehicle may be performed by the domain controller. In other words, after determining the torque control information based on the current accelerator pedal position information, the current operating mode information, the current vehicle speed information, and the current vehicle gear information that are acquired or detected by the first information acquisition unit to obtain the first control signal, the domain controller may send the first control signal to the first controlled units, to cause the first controlled units to perform the corresponding operations based on the first control signal. Consequently, the vehicle generates a corresponding driving force to accelerate.

In some embodiments, determining the torque control information based on the current accelerator pedal position information, the current operating mode information, the current vehicle speed information, and the current vehicle gear information includes:
determining the torque control information based on the current accelerator pedal position information, the current vehicle speed information, the current vehicle gear information, and a target mapping relationship, where the target torque mapping information is determined based on the current operating mode information and predetermined torque mapping information corresponding to each operating mode, and the torque mapping information includes a torque, and an accelerator pedal, a vehicle speed, and a vehicle gear torque that correspond to the torque.

As such, according to these embodiments of this application, after corresponding torque mapping information, namely, the target mapping information is determined based on the operating mode information, a corresponding torque may be determined based on the current accelerator pedal position information, the current vehicle speed information, and the current vehicle gear information, to obtain the torque control information. In this way, efficiency of obtaining the torque control information can be ensured.

In some embodiments, the first vehicle information includes current brake pedal position information, and the method further includes:
determining the torque control information based on a target braking torque, where the target braking torque is determined based on the current brake pedal position information.

As such, according to these embodiments of this application, after a user depresses a brake pedal to change a brake pedal position, the domain controller may further determine the target braking torque based on the current brake pedal position information, and generate the corresponding torque control information based on the target braking torque, to generate the corresponding first control signal. Then, after receiving the first control signal and obtaining the torque control information, the first controlled units may perform the corresponding operations, to cause the vehicle to generate the target braking torque. Consequently, a braking requirement of the user can be satisfied.

In some embodiments, the first vehicle information includes current battery state information and current drive motor state information, and determining the torque control information based on the target braking torque includes:
determining the torque control information based on the target braking torque and a current maximum braking torque, where the current maximum braking torque is determined based on the current battery state information and the current drive motor state information.

As such, according to these embodiments of this application, the domain controller may determine, based on the current drive motor state information, the current maximum braking torque that can be currently generated by the vehicle. Then, the domain controller may determine the corresponding torque control information based on the current maximum braking torque and the target braking torque. For example, the domain controller may determine the torque control information based on a smaller value between the current maximum braking torque and the target braking torque. Consequently, the torque control information can be determined more properly.

In some embodiments, the first vehicle information includes the current vehicle speed information, and determining the torque control information based on the target braking torque and the current maximum braking torque includes:
determining the torque control information based on the target braking torque, the current maximum braking torque, and a regenerative torque, where the regenerative torque is determined based on the current battery state information, the current drive motor state information, and the current vehicle speed information.

As such, according to these embodiments of this application, when determining the regenerative torque based on the current battery state information, the current drive motor state information, and the current vehicle speed information, that is, determining that the vehicle can perform battery energy regeneration during braking, the domain controller in the vehicle may determine the corresponding torque control information based on the target braking torque, the current maximum braking torque, and the regenerative torque, for example, generate the corresponding torque control information based on the regenerative torque, and the smaller value between the target braking torque and the current maximum braking torque. Consequently, after the first controlled units receive the first control signal, the vehicle may generate a braking torque corresponding to the smaller value, with the regenerative torque constituting a part of the braking torque. In this way, vehicle braking can be performed based on the regenerative torque.

In some embodiments, the first vehicle information includes current wheel speed information, and the method further includes:
determining the torque control information based on current slip information, where the current slip information is determined based on the current wheel speed information and vehicle speed information corresponding to the current wheel speed information.

As such, according to these embodiments of this application, the domain controller may further generate the corresponding torque control information and first control signal based on the current slip information that is determined based on the current wheel speed information and the current vehicle speed information. Then, the first controlled units that receive the first control signal and obtain the torque control information may perform the corresponding operations, for example, decelerating the vehicle. In this way, stable traveling of the vehicle can be ensured to some extent.

In some embodiments, the torque control information includes torque reduction information, the plurality of first controlled units include a drive motor, the first vehicle information includes a currently generated torque of the drive motor, and determining the torque control information based on the current slip information includes:
when the current slip information is that a vehicle slip ratio is higher than a preset value, determining torque reduction information of the drive motor based on the currently generated torque and the current slip information, to obtain the torque control information, where the drive motor is configured to reduce the currently generated torque based on the torque reduction information when the torque reduction information in the first control signal is obtained.

As such, according to these embodiments of this application, when the vehicle slip ratio is higher than the preset value, the domain controller may determine the corresponding torque reduction information and torque control information based on the currently generated torque of the drive motor. Then, when the domain controller sends the first control signal to the plurality of first controlled units and the drive motor receives the first control signal, the drive motor may obtain the torque reduction information based on the first control signal, and reduce the currently generated torque based on the torque reduction information. Consequently, a vehicle speed can be reduced, and the stable traveling of the vehicle can be ensured.

In some embodiments, the first vehicle information includes current vehicle steering information, and the method further includes:
determining the torque control information based on a vehicle steering angle, a vehicle steering torque, and a vehicle steering speed, where the vehicle steering angle, the vehicle steering torque, and the vehicle steering speed are determined based on the current vehicle steering information.

As such, according to these embodiments of this application, the domain controller may determine the corresponding torque control information based on the vehicle steering angle, the vehicle steering torque, and the vehicle steering speed that are determined based on the current vehicle steering information during steering of the vehicle, to cause the first controlled units in the vehicle to perform a vehicle steering operation based on the torque control information. Consequently, data processing during vehicle steering can be reliably or efficiently performed by the domain controller, and vehicle steering can be reliably performed.

In some embodiments, the torque control information includes torque adjustment information; the first vehicle information includes current wheel speed information, vehicle acceleration information, vehicle yaw angle information, and a currently generated torque of a drive motor; and determining the torque control information based on the vehicle steering angle, the vehicle steering torque, and the vehicle steering speed includes:
determining the torque adjustment information based on the vehicle steering angle, the vehicle steering torque, the vehicle steering speed, current slip information, current vehicle speed information, vehicle deviation information, and the currently generated torque, to obtain the torque control information, where the current slip information is determined based on the current wheel speed information, the vehicle deviation information is determined based on the vehicle acceleration information and the vehicle yaw angle information, and the drive motor is configured to: when the torque adjustment information in the first control signal is obtained, perform braking based on the torque adjustment information to align a forward direction of the vehicle with the vehicle steering angle.

As such, according to these embodiments of this application, the domain controller may further determine actual movement of the vehicle during steering based on the current slip information, the current vehicle speed information, the vehicle deviation information, and the currently generated torque, and determine the torque adjustment information based on a steering intention of the user, that is, the vehicle steering angle, the vehicle steering torque, and the vehicle steering speed. Then, after obtaining the torque adjustment information based on the first control signal, the first controlled units such as the drive motor may perform corresponding operations based on the torque adjustment information, to cause the actual movement of the vehicle to be consistent with the steering intention of the user, that is, to align the forward direction of the vehicle with the foregoing vehicle steering angle. In this way, lateral trajectory correction can be implemented.

An embodiment of this application provides a control system for a vehicle, including the foregoing domain controller.

An embodiment of this application provides a vehicle, including a vehicle body, where
the vehicle body is provided with the foregoing domain controller, or the foregoing control system for a vehicle.

An embodiment of this application provides a vehicle, including a memory and a processor, where the memory stores a computer program, and when the computer program is executed by the processor, the foregoing method is performed.

An embodiment of this application provides a computer-readable storage medium, where the computer-readable storage medium stores a computer program, and when the computer program is executed by one or more processors, the foregoing method is performed.

According to the control system for a vehicle, the vehicle, the computer-readable storage medium provided in embodiments of this application, after the information acquisition unit in the vehicle acquires first vehicle information such as vehicle deceleration information, the domain controller may determine a corresponding first control signal based on the first vehicle information of the information acquisition unit, to control, based on the first control signal, the plurality of first controlled units of the vehicle to perform corresponding operations, for example, to cause braking-related components such as calipers, motors, and the like to perform corresponding operations. Therefore, a plurality of functions of the vehicle may all rely on the domain controller to perform corresponding data processing. For example, functions of vehicle state detection, target torque calculation, torque arbitration, and torque distribution during vehicle braking may be all performed by the domain controller, thereby centralizing computing power of the vehicle. According to embodiments of this application, after the first control signal is sent to the plurality of first controlled units, any one of the plurality of first controlled units may perform a corresponding operation based on a function of the first controlled unit and the received first control signal. This allows the domain controller not to consider a receiver of the first control signal, thereby improving signal transmission efficiency of the domain controller to some extent, and consequently improving overall execution efficiency of the vehicle.

Additional aspects and advantages of this application are set forth in part in the following descriptions, and in part become apparent from the following descriptions or are learned by practice of this application.

### BRIEF DESCRIPTION OF DRAWINGS

The foregoing and/or additional aspects and advantages of this application are clear and easily understood in descriptions of embodiments with reference to the accompanying drawings.
FIG. 1 is a diagram of a vehicle control architecture;
FIG. 2 is a diagram of a vehicle in some embodiments of this application;
FIG. 3 is a flowchart of a control method for a vehicle in some embodiments of this application;
FIG. 4 is a diagram of a domain controller in some embodiments of this application;
FIG. 5 is a diagram of a vehicle in some embodiments of this application; and
FIG. 6 is a diagram of a vehicle in some embodiments of this application.

### DESCRIPTION OF EMBODIMENTS

The following describes in detail embodiments of this application, and examples of embodiments are shown in the accompanying drawings, where same or similar reference numerals throughout represent same or similar components or components having same or similar functions. Embodiments described below with reference to the accompanying drawings are provided as examples to describe this application, and should not be construed as a limitation on this application.

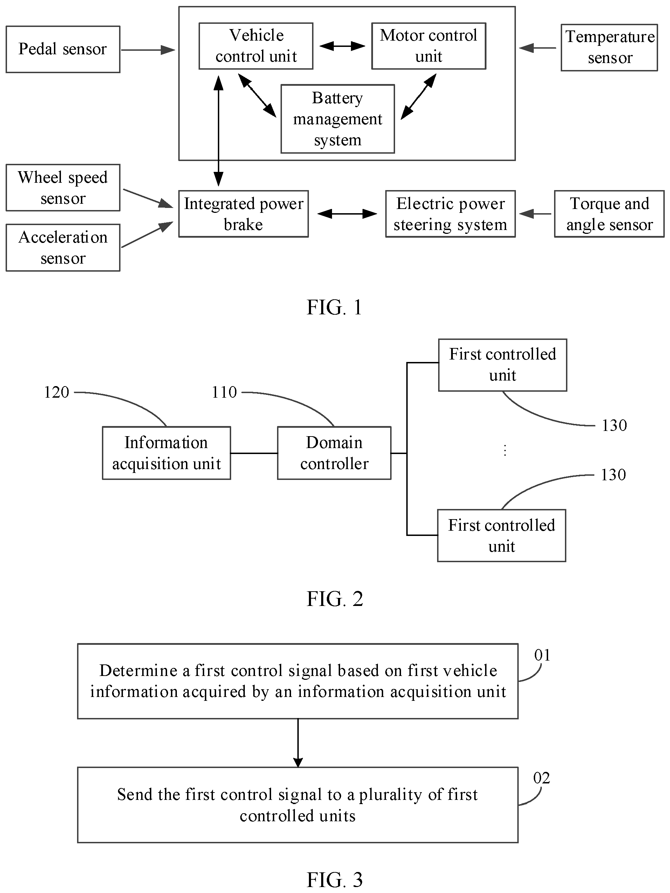

During traveling, any one of operations such as steering, deceleration, and acceleration of a vehicle requires the involvement of a plurality of sensors and a plurality of ECUs. Specifically, reference may be made to FIG. 1. FIG. 1 is a diagram of a vehicle control architecture. As shown in FIG. 1, braking and acceleration processes require the involvement of a wheel speed sensor, a pedal sensor, an acceleration sensor, an ECU of a vehicle control unit (Vehicle Control Unit, VCU), an ECU of a motor control unit (Motor Control Unit, MCU), and an ECU of a battery management system (Battery Management System, BMS), and a steering process requires the involvement of a torque and angle sensor, the wheel speed sensor, the acceleration sensor, an ECU of an integrated power brake (Integrated Power Brake, IPB), and an ECU of an electronic power steering (Electronic Power Steering, EPS) system. In addition, temperature data acquired by the temperature sensor needs to be sent to the ECU of the vehicle control unit, the ECU of the battery management system, and the ECU of the motor control unit, to ensure that the ECU of the vehicle control unit, the ECU of the battery management system, and the ECU of the motor control unit can determine, based on the temperature data, whether functions of the ECU of the vehicle control unit, the ECU of the battery management system, and the ECU of the motor control unit can be reliably performed. For example, when a vehicle temperature is excessively high, the motor control unit needs to prevent a further increase in motor speed.

Further, taking the braking process as an example, in the process in which the ECU of the vehicle control unit, the ECU of the battery management system, the ECU of the motor control unit, and the ECU of the integrated power brake work together to perform braking, each of the ECUs needs to transmit data calculated or generated by the ECU to another ECU. For example, the ECU of the battery management system needs to send an SOC (State of Charge, state of charge) of a power battery to the ECU of the vehicle control unit and the ECU of the motor control unit; the ECU of the vehicle control unit needs to send, to the ECU of the motor control unit, a demanded torque corresponding to a brake pedal position; and the ECU of the motor control unit needs to send a current torque of a motor to the ECU of the vehicle control unit.

Therefore, a total braking response time of the vehicle after a user depresses a brake pedal may include a calculation time and a logic processing time of each ECU, a data exchange time between different ECUs, and the like.

Therefore, if a complex function requires the involvement of a large quantity of ECUs, a response time of the function is intolerable to the user. Meanwhile, as user requirements become more complex and functions are upgraded, a quantity of sensors and ECUs required to implement each function increases. Due to factors such as connection relationships between ECUs and sensors, communication requirements between ECUs, and the like, the difficulty of vehicle wiring continuously increases, and an overall vehicle weight and overall vehicle costs also continuously increase.

In view of the foregoing possible problems, referring to FIG. 2, an embodiment of this application provides a domain controller 110, used in a vehicle. The domain controller 110 is connected to an information acquisition unit 120 of the vehicle. The domain controller 110 is connected to a plurality of first controlled units 130 of the vehicle. The domain controller 110 is configured to: determine a first control signal based on first vehicle information acquired by the information acquisition unit 120, and send the first control signal to the plurality of first controlled units 130. The first control signal instructs the plurality of first controlled units 130 to perform corresponding operations.

Referring to FIG. 3, an embodiment of this application further provides a control method for a vehicle provided with the foregoing domain controller 110. The method includes the following steps:
01: Determine a first control signal based on first vehicle information acquired by the information acquisition unit 120.
02: Send the first control signal to the plurality of first controlled units 130, where the first control signal instructs the plurality of first controlled units 130 to perform corresponding operations.

An embodiment of this application further provides a vehicle, where the vehicle includes a memory and a processor. The control method for a vehicle according to embodiments of this application may be performed by the vehicle according to this embodiment of this application. Specifically, the memory stores a computer program, and the processor is configured to: determine the first control signal based on the first vehicle information acquired by the information acquisition unit 120, and send the first control signal to the plurality of first controlled units 130, where the first control signal instructs the plurality of first controlled units 130 to perform corresponding operations.

The vehicle according to this embodiment of this application is configured based on a domain-controlled electronic and electrical architecture. The vehicle is divided into a plurality of domains. Components within each domain are controlled by a corresponding domain controller 110. Domain controllers 110 for different domains are connected to each other to exchange data. For example, in some embodiments, the vehicle is divided into a powertrain domain, an advanced driver assistance system (ADAS)/autonomous driving (AD) domain, a cockpit domain, a chassis domain, and a body domain. Accordingly, the vehicle includes a powertrain domain controller 110, an ADAS/AD domain controller 110, a cockpit domain controller 110, a chassis domain controller 110, and a body domain controller 110. Each of the domain controllers 110 is configured to be responsible for all components within a domain associated with the domain controller 110. For example, the powertrain domain controller 110 may be responsible for control of a hydraulic brake unit and a drive motor, and the body domain controller 110 may be responsible for suspension control.

In some other embodiments, the vehicle is divided into a front domain, a rear domain, a left domain, a right domain, and an intelligent cockpit domain. Accordingly, the vehicle includes a front domain controller 110, a rear domain controller 110, a left domain controller 110, a right domain controller 110, and an intelligent cockpit domain controller 110.

Based on the domain-controlled electronic and electrical architecture, the domain controller 110 in embodiments of this application is connected to each information acquisition unit 120 within a domain associated with the domain controller 110. The information acquisition unit 120 may be understood as a component, including a sensor, that can be configured to acquire or detect an operating parameter of a component in the vehicle. For example, the information acquisition unit 120 may be understood as a sensor configured to acquire a brake pedal position or a drive pedal position. For another example, the information acquisition unit 120 may be understood as a temperature sensor configured to acquire a temperature of a power battery.

Further, when a plurality of information acquisition units 120 are all connected to one domain controller 110, the domain controller 110 may perform, based on data acquired by each information acquisition unit 120, data processing functions such as user intention determination, torque calculation, torque distribution, and the like. For example, after determining an accelerator pedal position based on data acquired by an accelerator pedal position sensor, the domain controller 110 determines a user-demanded torque based on data acquired by another sensor (for example, a wheel speed sensor). Finally, the domain controller 110 generates a first control signal based on the user demanded torque, and broadcasts the first control signal over an in-vehicle local area network, that is, sends the first control signal to the plurality of first controlled units 130 connected to the domain controller 110.

Still further, after receiving the first control signal, the first controlled units 130 in embodiments of this application may autonomously perform corresponding operations based on data in the first control signal. For example, when a drive torque status bit in the first control signal is 1 rather than 0, a first controlled unit 130 related to driving (for example, a drive motor) may perform a corresponding control operation based on the first control signal to accelerate or drive the vehicle. It can be understood that an operation that may be performed by each first controlled unit 130 unrelated to driving (for example, a hydraulic brake unit) may be an operation of "maintaining a current state unchanged", that is, "not performing any processing".

For another example, in some embodiments, the first control signal includes "a braking torque N1 allocated to a first controlled unit A", "a braking torque N2 allocated to a first controlled unit B", and "a braking torque N3 allocated to a first controlled unit C". Accordingly, after the first controlled unit A, the first controlled unit B, and the first controlled unit C each receive the first control signal, the first controlled unit A performs a corresponding operation to generate a braking force corresponding to a value of N1, the first controlled unit B performs a corresponding operation to generate a braking force corresponding to a value of N2, and the first controlled unit C performs a corresponding operation to generate a braking force corresponding to a value of N3, thereby implementing vehicle braking.

It can be appreciated that, in embodiments of this application, the domain controller 110 may be located in the same local area network as the first controlled units 130. Therefore, the domain controller 110 may directly broadcast the first control signal over the local area network, to cause each first controlled unit 130 in the local area network to perform a corresponding operation after receiving the first control signal broadcast by the domain controller 110.

To summarize, according to embodiments of this application, after the information acquisition unit 120 in the vehicle acquires the first vehicle information such as vehicle deceleration information, the domain controller 110 may determine the corresponding first control signal based on the first vehicle information of the information acquisition unit 120, to control, based on the first control signal, the plurality of first controlled units 130 of the vehicle to perform the corresponding operations, for example, to cause braking-related components such as calipers, motors, and the like to perform corresponding operations. Therefore, a plurality of functions of the vehicle may all rely on the domain controller 110 to perform corresponding data processing. For example, functions of vehicle state detection, target torque calculation, torque arbitration, and torque distribution during vehicle braking may be all performed by the domain controller, thereby centralizing computing power of the vehicle. According to embodiments of this application, after the first control signal is sent to the plurality of first controlled units 130, any one of the plurality of first controlled units 130 may perform a corresponding operation based on a function of the first controlled unit 130 and the received first control signal. This allows the domain controller 110 not to consider a receiver of the first control signal, thereby improving signal transmission efficiency of the domain controller 110 to some extent, and consequently improving overall execution efficiency of the vehicle.

It can be further understood that, due to limitations in pin count and computing power, sensors in the vehicle may not all be connected to one domain controller 110, and each sensor in the vehicle may be connected to a domain controller 110 corresponding to a domain associated with the sensor. The domain controllers 110 may be connected to each other. Further, assuming that the left domain controller 110 requires specific data acquired by a sensor in the right domain, the left domain controller 110 may send a request to the right domain controller 110, to cause the right domain controller 110 to forward the foregoing specific data to the left domain controller 110. It can be understood that, based on such a connection manner, forwarding and exchange of various types of data may be performed via a small quantity of domain controllers 110, so that data transmission efficiency can be ensured.

Moreover, when one domain controller 110 integrates a plurality of functional modules or a plurality of functions, for example, when one domain controller 110 integrates functions of both a powertrain-related ECU and a chassis-related ECU, that is, includes data processing function modules respectively corresponding to a VCU, an MCU, a BMS, an IPB, and an EPS system, and when the vehicle performs powertrain-related and chassis-related drive control or deceleration control, the domain controller 110 may perform calculation or processing via the data processing function module corresponding to the VCU that the domain controller 110 integrates to obtain a corresponding data processing result, and forwards the data processing result to one or a combination of the data processing function modules respectively corresponding to the MCU, the BMS, the IPB, and the EPS system. It can be understood that, compared with the foregoing case in which the vehicle is provided with a plurality of ECUs and data forwarding is performed between any two of the ECUs, embodiments of this application further allow data forwarding to be performed within the domain controller 110, so that data forwarding can be transformed into data invocation. As a result, data processing efficiency and data utilization efficiency can be improved.

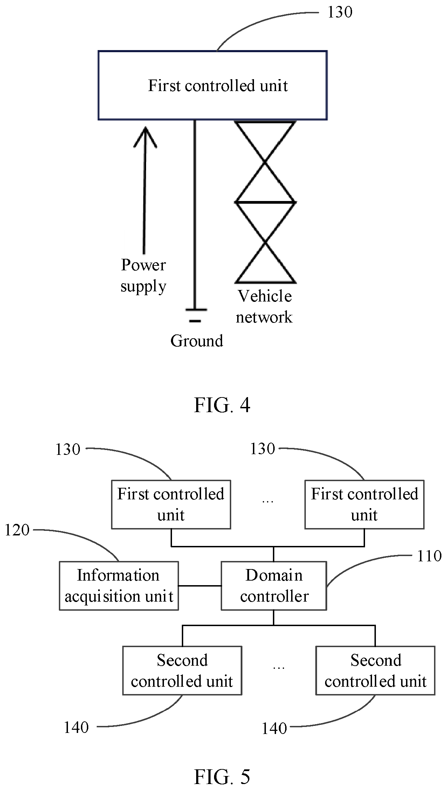

In addition, it should be further noted that a specific structure of the first controlled unit 130 in embodiments of this application may be configured according to actual conditions. For example, in some embodiments, specific reference may be made to FIG. 4. FIG. 4 is a diagram of a first controlled unit 130 in some embodiments of this application. That is, each first controlled unit 130 may be provided with a power port, a ground port, and a network port, and each network port may be configured to connect to a CAN-FD (Controller Area Network with Flexible Data Rate, controller area network with flexible data rate). This enables each first controlled unit 130 to be controlled via the same network protocol.

In some embodiment of this application, referring to FIG. 5, the domain controller 110 is connected to a plurality of second controlled units 140 of the vehicle. The domain controller 110 is configured to: determine a second control signal based on second vehicle information acquired by the plurality of second controlled units 140, and send the second control signal to the plurality of second controlled units 140, where the second control signal instructs the plurality of second controlled units 140 to perform corresponding operations.

The control method according to embodiments of this application further includes:
determining a second control signal based on second vehicle information acquired by the plurality of second controlled units 140, and send the second control signal to the plurality of second controlled units 140, where the second control signal instructs the plurality of second controlled units 140 to perform corresponding operations.

The processor according to embodiments of this application is further configured to: determine a second control signal based on second vehicle information acquired by the plurality of second controlled units 140, and send the second control signal to the plurality of second controlled units 140, where the second control signal instructs the plurality of second controlled units 140 to perform corresponding operations.

It should be noted that the second controlled unit 140 in embodiments of this application may be understood as a component that can not only receive and send signals, but also perform corresponding operations based on the received signals. For example, the second controlled units 140 in some embodiments may include a door locking and unlocking unit.

Further, after the door locking and unlocking unit receives a door locking command sent by a user to the vehicle via a device such as a vehicle key or a mobile terminal, the door locking and unlocking unit receives a door locking signal and sends the door locking signal to the domain controller 110. After verifying that the door locking signal is valid, the domain controller 110 may send a second control signal to each second controlled unit 140. After receiving the second control signal, the door locking and unlocking unit in the second controlled units 140 may perform a locking operation based on the second control signal.

It can be understood that, in embodiments of this application, the second controlled units 140 may also be located in the same local area network as the domain controller 110. Therefore, the domain controller 110 may broadcast the second control signal over the local area network, to cause each second controlled unit 140 in the local area network to receive the second control signal and perform a corresponding operation. For example, after receiving the second control signal, the door locking and unlocking unit may perform a locking operation based on the second control signal. Conversely, a second controlled unit 140 other than the door locking and unlocking unit may perform an operation of "maintaining a current state unchanged", that is, not performing any processing.

As such, according to embodiments of this application, after receiving the second control signal, the second controlled units 140 in the vehicle may perform the corresponding operations. Therefore, all data processing related to the second controlled units 140 in the vehicle may be performed by the domain controller 110, allowing computing power of the domain controller 110 to be fully leveraged.

In some embodiments of this application, the first control signal includes torque control information.

That is, after determining, based on information acquired by each information acquisition unit 120, a desired driving force or braking force to be generated by the vehicle after the user depresses a brake pedal or a drive pedal, the domain controller 110 according to embodiments of this application may generate the torque control information.

Further, after generating the torque control information, the domain controller 110 may generate the corresponding first control signal based on the torque control information, and send the first control signal to the plurality of first controlled units 130, to cause each first controlled unit 130 to perform a corresponding operation after receiving the first control signal and obtaining the torque control information. Consequently, the vehicle generates the driving force or braking force, to satisfy a user intention.

In some embodiments of this application, the first vehicle information includes current accelerator pedal position information, current operating mode information, current vehicle speed information, and current vehicle gear information. The domain controller 110 is configured to determine the torque control information based on the current accelerator pedal position information, the current operating mode information, the current vehicle speed information, and the current vehicle gear information.

In the control method according to embodiments of this application, step 01 includes:
determining the torque control information based on the current accelerator pedal position information, the current operating mode information, the current vehicle speed information, and the current vehicle gear information.

The processor according to embodiments of this application is further configured to determine the torque control information based on the current accelerator pedal position information, the current operating mode information, the current vehicle speed information, and the current vehicle gear information.

That is, in embodiments of this application, there may be a plurality of first information acquisition units 120, for example, an accelerator pedal sensor configured to acquire accelerator pedal position information, a wheel speed sensor (or a vehicle speed sensor) configured to acquire vehicle speed information, a gear detection unit configured to detect a vehicle gear (a forward gear or a reverse gear), and a mode detection unit configured to detect a vehicle operating mode. Therefore, after receiving information acquired or detected by the first information acquisition units 120 at a current moment, namely, the current accelerator pedal position information, the current operating mode information, the current vehicle speed information, and the current vehicle gear information, the domain controller 110 may determine a user-demanded vehicle driving force based on the current accelerator pedal position information, the current operating mode information, the current vehicle speed information, and the current vehicle gear information, to determine the corresponding torque control information and further generate the corresponding first control signal.

It can be understood that, after determining, based on the obtained current accelerator pedal position information, that an accelerator pedal of the vehicle has been depressed, the domain controller 110 may determine a driving force demanded by a driver to accelerate the vehicle, in other words, the torque control information, based on the current accelerator pedal position information in combination with the current operating mode information, the current vehicle speed information, and the current vehicle gear information.

It can be further understood that, after determining the torque control information, the domain controller 110 may generate the corresponding first control signal based on the torque control information, and send the first control signal to each first controlled unit 130. Further, after receiving the first control signal, a component related to vehicle acceleration may perform a corresponding operation, that is, generate the user-demanded driving force, based on the first control signal to accelerate the vehicle.

As such, according to embodiments of this application, drive control of the vehicle may be performed by the domain controller 110. In other words, after determining the torque control information based on the current accelerator pedal position information, the current operating mode information, the current vehicle speed information, and the current vehicle gear information that are acquired or detected by the first information acquisition units 120 to obtain the first control signal, the domain controller 110 may send the first control signal to the first controlled units 130, to cause the first controlled units 130 to perform the corresponding operations based on the first control signal. Consequently, the vehicle generates the corresponding driving force to accelerate.

Furthermore, it can be further understood that a specific process of determining the torque control information based on the current accelerator pedal position information in combination with the current operating mode information, the current vehicle speed information, and the current vehicle gear information may be configured according to actual conditions.

In addition, it should be further noted that, in some embodiments of this application, the current vehicle speed information may be corresponding vehicle speed information determined based on the current wheel speed information acquired by the wheel speed sensor in the vehicle, by a preconfigured vehicle speed calculation method or vehicle speed calculation module.

In some embodiments of this application, the domain controller 110 is configured to determine the torque control information based on the current accelerator pedal position information, the current vehicle speed information, the current vehicle gear information, and a target mapping relationship, where the target torque mapping information is determined based on the current operating mode information and predetermined torque mapping information corresponding to each operating mode, and the torque mapping information includes a torque, and an accelerator pedal, a vehicle speed, and a vehicle gear torque that correspond to the torque.

In the control method according to embodiments of this application, the step of determining the torque control information based on the current accelerator pedal position information, the current operating mode information, the current vehicle speed information, and the current vehicle gear information includes:
determining the torque control information based on the current accelerator pedal position information, the current vehicle speed information, the current vehicle gear information, and a target mapping relationship, where the target torque mapping information is determined based on the current operating mode information and predetermined torque mapping information corresponding to each operating mode, and the torque mapping information includes a torque, and an accelerator pedal, a vehicle speed, and a vehicle gear torque that correspond to the torque.

The processor according to embodiments of this application is further configured to determine the torque control information based on the current accelerator pedal position information, the current vehicle speed information, the current vehicle gear information, and a target mapping relationship, where the target torque mapping information is determined based on the current operating mode information and predetermined torque mapping information corresponding to each operating mode, and the torque mapping information includes a torque, and an accelerator pedal, a vehicle speed, and a vehicle gear torque that correspond to the torque.

That is, the vehicle according to embodiments of this application prestores torque mapping information corresponding to different operating modes of the vehicle. Therefore, the vehicle according to embodiments of this application may determine, based on a current operating mode, target torque mapping information corresponding to the current operating mode from torque mapping information corresponding to each operating mode.

For example, it is assumed that operating modes configurable for the vehicle include a normal driving mode, an eco mode, and a sport mode; and the prestored torque mapping information of the vehicle includes torque mapping information *inform*₁ corresponding to the normal driving mode, torque mapping information *inform*₂ corresponding to the eco mode, and torque mapping information *inform*₃ corresponding to the sport mode. Further, if the domain controller 110 determines, based on the current operating mode information, that the current operating mode is the sport mode, the domain controller 110 may use the torque mapping information *inform*₃ as the target mapping relationship.

It should be further noted that the torque mapping information in embodiments of this application may be understood as a mapping table with "accelerator pedal, vehicle speed, and vehicle gear" as keys (keys) and "torque" as a value (value). Further, the domain controller 110 may determine a corresponding value, namely, a torque, from the target torque mapping information based on the current accelerator pedal position information, the current vehicle speed information, the current vehicle gear information, and the target mapping relationship, thereby obtaining a torque control signal.

As such, according to embodiments of this application, after corresponding torque mapping information, namely, the target mapping information is determined based on the operating mode information, a corresponding torque may be determined based on the current accelerator pedal position information, the current vehicle speed information, and the current vehicle gear information, to obtain the torque control information. In this way, efficiency of obtaining the torque control information can be ensured.

In addition, it can be further understood that the foregoing mapping table is merely a feasible implementation, and this application may adopt other implementations, such as a function or a neural network model, to configure the torque mapping information.

In some embodiments of this application, the first vehicle information includes current brake pedal position information. The domain controller 110 is configured to determine the torque control information based on a target braking torque, where the target braking torque is determined based on the current brake pedal position information.

In the control method according to embodiments of this application, step 01 includes:
determining the torque control information based on a target braking torque, where the target braking torque is determined based on the current brake pedal position information.

The processor according to embodiments of this application is further configured to determine the torque control information based on a target braking torque, where the target braking torque is determined based on the current brake pedal position information.

That is, after the user depresses the brake pedal, or after the current brake pedal position information indicates that the brake pedal has been depressed, the domain controller 110 according to embodiments of this application may further determine a corresponding braking torque, namely, the target braking torque based on the current brake pedal position information.

Further, after obtaining the target braking torque, the domain controller 110 may further determine the corresponding torque control information based on the target braking torque, to cause braking-related components to perform corresponding operations. Consequently, the vehicle generates a corresponding braking force, to satisfy a user requirement or a user intention.

As such, according to embodiments of this application, after the user depresses the brake pedal to change a brake pedal position, the domain controller 110 may further determine the target braking torque based on the current brake pedal position information, and generate the corresponding torque control information based on the target braking torque, to generate the corresponding first control signal. Then, after receiving the first control signal and obtaining the torque control information, the first controlled units 130 may perform the corresponding operations, to cause the vehicle to generate the target braking torque. Consequently, a braking requirement of the user can be satisfied.

In some embodiments of this application, the first vehicle information includes current battery state information and current drive motor state information. The domain controller 110 is configured to:
determine a current maximum braking torque based on the current battery state information and the current drive motor state information; and
determine the torque control information based on the target braking torque and the current maximum braking torque.

In the control method according to embodiments of this application, the step of determining the torque control information based on the target braking torque, where the target braking torque is determined based on the current brake pedal position information includes:
determining the torque control information based on the target braking torque and a current maximum braking torque, where the current maximum braking torque is determined based on the current battery state information and the current drive motor state information.

The processor according to embodiments of this application is further configured to determine the torque control information based on the target braking torque and a current maximum braking torque, where the current maximum braking torque is determined based on the current battery state information and the current drive motor state information.

That is, after determining a user-demanded torque, namely, the target braking torque, the domain controller 110 according to embodiments of this application further determines a maximum braking torque actually achievable by the vehicle, namely, the current maximum braking torque based on an actual condition of the drive motor, that is, the current drive motor state information. It can be understood that specific content of the current drive motor state information in embodiments of this application may be configured according to actual conditions. For example, in some embodiments, the current drive motor state information includes a rotational speed and a temperature of the drive motor.

Further, after determining the current maximum braking torque, the domain controller 110 may determine, based on a smaller value between the current maximum braking torque and the target braking torque, a value of a final braking torque to be generated by the vehicle.

For example, if the target braking torque is less than the current maximum braking torque, the vehicle generates the torque control information based on the target braking torque, and generates the corresponding first control signal. After the first controlled units 130 receive the first control signal and perform the corresponding operations, the vehicle generates a braking force corresponding to a value of the target braking torque.

Conversely, if the current maximum braking torque is less than or equal to the target braking torque, after the first controlled units 130 receive the first control signal and perform the corresponding operations, the vehicle generates a braking force corresponding to a value of the current maximum braking torque.

As such, according to embodiments of this application, the domain controller 110 may determine, based on the current drive motor state information, the current maximum braking torque that can be currently generated by the vehicle. Then, the domain controller 110 may determine the corresponding torque control information based on the current maximum braking torque and the target braking torque. For example, the domain controller 110 may determine the torque control information based on the smaller value between the current maximum braking torque and the target braking torque. Consequently, the torque control information can be determined more properly.

In some embodiments of this application, the first vehicle information includes the current vehicle speed information. The domain controller 110 is configured to: determine the torque control information based on the target braking torque, the current maximum braking torque, and a regenerative torque, where the regenerative torque is determined based on the current battery state information, the current drive motor state information, and the current vehicle speed information.

In the control method according to embodiments of this application, the step of determining the torque control information based on the target braking torque and the current maximum braking torque includes:
determining the torque control information based on the target braking torque, the current maximum braking torque, and a regenerative torque, where the regenerative torque is determined based on the current battery state information, the current drive motor state information, and the current vehicle speed information.

The processor according to embodiments of this application is further configured to determine the torque control information based on the target braking torque, the current maximum braking torque, and a regenerative torque, where the regenerative torque is determined based on the current battery state information, the current drive motor state information, and the current vehicle speed information.

That is, the domain controller 110 according to embodiments of this application may further determine, based on the current battery state information, the current drive motor state information, and the current vehicle speed information, whether the vehicle needs to perform regenerative braking, that is, whether to allocate a braking torque of a specific value as the regenerative torque.

Further, the domain controller 110 determines, based on the current battery state information, the current drive motor state information, and the current vehicle speed information, that is, based on a current power of the power battery (corresponding to the current battery state information), a current vehicle speed of the vehicle, a current rotational speed and a current temperature of the drive motor (corresponding to the current drive motor state information), and the like, whether energy regeneration needs to be performed for the vehicle battery. If yes, the domain controller 110 determines the corresponding regenerative torque.

Finally, the domain controller 110 determines the torque control information based on the target braking torque, the current maximum braking torque, and the regenerative torque. For example, the domain controller 110 may determine, based on the smaller value between the target braking torque and the current maximum braking torque, the final braking torque to be actually generated by the vehicle, with the regenerative torque replacing a part of the final braking torque.

For example, assuming that the smaller value between the target braking torque and the current maximum braking torque is 2000 N, and the regenerative torque determined by the domain controller 110 is 1000 N, after all of the first controlled units 130 in the vehicle receive the first control signal, hydraulic brake units in all of the first controlled units 130 may generate a braking force of 1000 N, and the drive motor may generate a regenerative torque of 1000 N, thereby enabling the vehicle to implement braking.

As such, according to embodiments of this application, when determining the regenerative torque based on the current battery state information, the current drive motor state information, and the current vehicle speed information, that is, determining that the vehicle can perform battery energy regeneration during braking, the domain controller 110 in the vehicle may determine the corresponding torque control information based on the target braking torque, the current maximum braking torque, and the regenerative torque, for example, generate the corresponding torque control information based on the regenerative torque, and the smaller value between the target braking torque and the current maximum braking torque. Consequently, after the first controlled units 130 receive the first control signal, the vehicle may generate a braking torque corresponding to the smaller value, with the regenerative torque constituting a part of the braking torque. In this way, vehicle braking can be performed based on the regenerative torque.

In some embodiments of this application, the first vehicle information includes current wheel speed information. The domain controller 110 is configured to determine the torque control information based on current slip information, where the current slip information is determined based on the current wheel speed information and vehicle speed information corresponding to the current wheel speed information.

In some embodiments of this application, step 01 includes:
determining the torque control information based on current slip information, where the current slip information is determined based on the current wheel speed information and vehicle speed information corresponding to the current wheel speed information.

The processor according to embodiments of this application is further configured to determine the torque control information based on current slip information, where the current slip information is determined based on the current wheel speed information and vehicle speed information corresponding to the current wheel speed information.

That is, according to embodiments of this application, to avoid a situation in which severe wheel slip occurs due to slippery road conditions during traveling of the vehicle, which results in a high vehicle slip ratio and thus a high risk of loss of wheel control, the domain controller 110 may further determine the current vehicle speed information of the vehicle based on the current wheel speed information detected by the wheel speed sensor, and then calculate a vehicle slip ratio based on the current vehicle speed information and the current wheel speed information of the vehicle, to obtain the current slip information.

Finally, the domain controller 110 may determine the corresponding torque control information based on the current slip information, to cause the first controlled units 130 that receive the first control signal and obtain the torque control information after the first control signal is generated to generate a specific braking torque to reduce the vehicle speed, thereby maintaining vehicle body stability.

As such, according to these embodiments of this application, the domain controller 110 may further generate the corresponding torque control information and first control signal based on the current slip information that is determined based on the current wheel speed information and the current vehicle speed information. Then, the first controlled units 130 that receive the first control signal and obtain the torque control information may perform the corresponding operations, for example, decelerating the vehicle. In this way, stable traveling of the vehicle can be ensured to some extent.

In some embodiments, the torque control information includes torque reduction information, the plurality of first controlled units 130 include a drive motor, and the first vehicle information includes a currently generated torque of the drive motor. The domain controller 110 is configured to:
when the current slip information is that a vehicle slip ratio is higher than a preset value, determine torque reduction information of the drive motor based on the currently generated torque and the current slip information, to obtain the torque control information, where the drive motor is configured to reduce the currently generated torque based on the torque reduction information when the torque reduction information in the first control signal is obtained.

In the control method according to embodiments of this application, the step of determining the torque control information based on the current slip information includes:
when the current slip information is that a vehicle slip ratio is higher than a preset value, determining torque reduction information of the drive motor based on the currently generated torque and the current slip information, to obtain the torque control information, where the drive motor is configured to reduce the currently generated torque based on the torque reduction information when the torque reduction information in the first control signal is obtained.

The processor according to embodiments of this application is further configured to: when the current slip information is that a vehicle slip ratio is higher than a preset value, determine torque reduction information of the drive motor based on the currently generated torque and the current slip information, to obtain the torque control information, where the drive motor is configured to reduce the currently generated torque based on the torque reduction information when the torque reduction information in the first control signal is obtained.

That is, according to embodiments of this application, in a process of determining the torque control information based on the vehicle slip ratio, an amount of torque to be reduced for the entire vehicle is further determined based on a torque generated by the drive motor at a current moment, to obtain the torque reduction information, and the torque control information is determined based on the torque reduction information.

For example, when the domain controller 110 determines, based on the previously determined current slip information, that the vehicle slip ratio is higher than the preset value (for example, 20%), the domain controller 110 may determine, based on the currently generated torque of the drive motor detected by the information acquisition unit 120, an amount by which the current torque is to be reduced or decreased by the drive motor, namely, the torque reduction information. Finally, the domain controller 110 may determine the torque control information based on the torque reduction information, or determine the torque reduction information as the torque control information. Further, after the first controlled units 130 receive the first control signal, obtain the torque control information, and perform the corresponding operations, that is, after the drive motor receives the first control signal, obtains the torque control information, and performs the corresponding operation, the drive motor reduces the currently generated torque based on the torque reduction information, to reversely drag the vehicle. Consequently, the vehicle speed can be reduced.

As such, according to embodiments of this application, when the vehicle slip ratio is higher than the preset value, the domain controller 110 may determine the corresponding torque reduction information and torque control information based on the currently generated torque of the drive motor. Then, when the domain controller 110 sends the first control signal to the plurality of first controlled units 130 and the drive motor receives the first control signal, the drive motor may obtain the torque reduction information based on the first control signal, and reduce the currently generated torque based on the torque reduction information. Consequently, a vehicle speed can be reduced, and the stable traveling of the vehicle can be ensured.

In some embodiments, the first vehicle information includes current vehicle steering information. The domain controller 110 is configured to determine the torque control information based on a vehicle steering angle, a vehicle steering torque, and a vehicle steering speed, where the vehicle steering angle, the vehicle steering torque, and the vehicle steering speed are determined based on the current vehicle steering information.

In the control method according to embodiments of this application, step 01 includes:
determining the torque control information based on a vehicle steering angle, a vehicle steering torque, and a vehicle steering speed, where the vehicle steering angle, the vehicle steering torque, and the vehicle steering speed are determined based on the current vehicle steering information.

The processor according to embodiments of this application is further configured to determine the torque control information based on a vehicle steering angle, a vehicle steering torque, and a vehicle steering speed, where the vehicle steering angle, the vehicle steering torque, and the vehicle steering speed are determined based on the current vehicle steering information.

That is, the domain controller 110 according to embodiments of this application may be further responsible for data processing operations during steering of the vehicle. That is, when the first vehicle information acquired by the information acquisition unit 120 includes the current vehicle steering information as a result of the user rotating a steering wheel, the domain controller 110 may further determine the corresponding vehicle steering angle, vehicle steering torque, and vehicle steering speed based on the current vehicle steering information, thereby obtaining a steering intention of the user. Then, the domain controller 110 may determine the corresponding torque control information based on the vehicle steering angle, the vehicle steering torque, and the vehicle steering speed, to perform a vehicle steering operation or assist the user in performing the vehicle steering operation.

It should be noted that the current vehicle steering information in embodiments of this application may be understood as information acquired by a torque and angle sensor.

It should be further noted that the vehicle steering angle may be understood as an angle by which the vehicle body turns to the left or the right as a result of the user rotating the steering wheel, the vehicle steering torque may be understood as a steering torque applied by the user or the driver, and the vehicle steering speed may be understood as a vehicle speed of the vehicle during steering, including a velocity and an acceleration.

As such, according to embodiments of this application, the domain controller 110 may determine the corresponding torque control information based on the vehicle steering angle, the vehicle steering torque, and the vehicle steering speed that are determined based on the current vehicle steering information during steering of the vehicle, to cause the first controlled units 130 in the vehicle to perform a vehicle steering operation based on the torque control information. Consequently, data processing during vehicle steering can be reliably or efficiently performed by the domain controller 110, and vehicle steering can be reliably performed.

In some embodiments, the torque control information includes torque adjustment information; and the first vehicle information includes current wheel speed information, vehicle acceleration information, vehicle yaw angle information, and a currently generated torque of a drive motor. The domain controller 110 is configured to determine the torque adjustment information based on the vehicle steering angle, the vehicle steering torque, the vehicle steering speed, current slip information, current vehicle speed information, vehicle deviation information, and the currently generated torque, to obtain the torque control information, where the current slip information is determined based on the current wheel speed information, the vehicle deviation information is determined based on the vehicle acceleration information and the vehicle yaw angle information, and the drive motor is configured to: when the torque adjustment information in the first control signal is obtained, perform braking based on the torque adjustment information to align a forward direction of the vehicle with the vehicle steering angle.

In the control method according to embodiments of this application, the step of determining the torque control information based on the vehicle steering angle, the vehicle steering torque, and the vehicle steering speed includes:
determining the torque adjustment information based on the vehicle steering angle, the vehicle steering torque, the vehicle steering speed, current slip information, current vehicle speed information, vehicle deviation information, and the currently generated torque, to obtain the torque control information, where the current slip information is determined based on the current wheel speed information, the vehicle deviation information is determined based on the vehicle acceleration information and the vehicle yaw angle information, and the drive motor is configured to: when the torque adjustment information in the first control signal is obtained, perform braking based on the torque adjustment information to align a forward direction of the vehicle with the vehicle steering angle.

The processor according to embodiments of this application is further configured to determine the torque adjustment information based on the vehicle steering angle, the vehicle steering torque, the vehicle steering speed, current slip information, current vehicle speed information, vehicle deviation information, and the currently generated torque, to obtain the torque control information, where the current slip information is determined based on the current wheel speed information, the vehicle deviation information is determined based on the vehicle acceleration information and the vehicle yaw angle information, and the drive motor is configured to: when the torque adjustment information in the first control signal is obtained, perform braking based on the torque adjustment information to align a forward direction of the vehicle with the vehicle steering angle.

That is, according to embodiments of this application, to avoid or improve trajectory deviation during steering of the vehicle, the currently generated torque of the drive motor is further acquired, during steering of the vehicle, based on the current wheel speed information acquired by the wheel speed sensor, the vehicle acceleration information acquired by an acceleration sensor, and the vehicle yaw angle information detected by a yaw angle sensor.

Then, the current vehicle speed information is determined based on the current wheel speed information, and the slip ratio, namely, the current slip information, is determined based on the current vehicle speed information and the current wheel speed information.

In addition, a deviation between an actual steering direction of the vehicle and a rotation direction of the steering wheel, namely, the vehicle deviation information is determined based on the vehicle acceleration information and the vehicle yaw angle information.

Then, the corresponding torque adjustment information is determined based on the previously determined steering intention of the user, that is, the vehicle steering angle, the vehicle steering torque, and the vehicle steering speed, in combination with an actual steering condition of the vehicle and a traveling condition of the vehicle, that is, the vehicle deviation information and the current slip information.

Finally, the torque control information is determined based on the torque adjustment information, or the torque adjustment information is determined as the torque control information, and then, the corresponding first control signal is generated based on the torque control information After the first control signal is received by the first controlled units 130, the first controlled units 130 perform the corresponding operations based on the torque adjustment information in the first control signal. For example, the drive motor performs corresponding output torque adjustment based on the torque adjustment information, to cause a forward direction of the vehicle to match or be consistent with a steering direction expected by the user, that is, to align the forward direction of the vehicle with the foregoing vehicle steering angle. In this way, lateral trajectory correction is implemented.

In some embodiments, after obtaining the torque adjustment information, the first controlled units 130 may further perform a regenerative braking operation.

As such, according to these embodiments of this application, the domain controller 110 may further determine actual movement of the vehicle during steering based on the current slip information, the current vehicle speed information, the vehicle deviation information, and the currently generated torque, and determine the torque adjustment information based on a steering intention of the user, that is, the vehicle steering angle, the vehicle steering torque, and the vehicle steering speed. Then, after obtaining the torque adjustment information based on the first control signal, the first controlled units 130 such as the drive motor may perform the corresponding operations based on the torque adjustment information, to cause the actual movement of the vehicle to be consistent with the steering intention of the user, that is, to align the forward direction of the vehicle with the foregoing vehicle steering angle. In this way, lateral trajectory correction can be implemented.

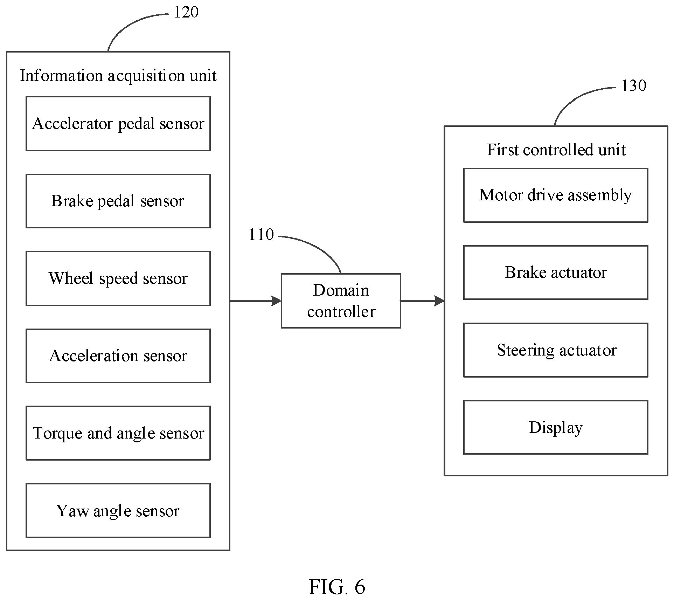

In some embodiments of this application, specific reference may be made to FIG. 6. FIG. 6 is a diagram of a vehicle in some embodiments of this application. That is, in embodiments of this application, the information acquisition unit 120 may include an accelerator pedal sensor, a brake pedal sensor, a wheel speed sensor, an acceleration sensor, a torque and angle sensor, and a yaw angle sensor; and the first controlled units 130 may include a motor drive assembly configured to control a vehicle drive motor, a brake actuator configured to control a braking-related component (for example, a hydraulic brake unit), a steering actuator configured to control a steering-related component, and an in-vehicle display.

In some embodiments, the domain controller in embodiments of this application includes a data arbitration module, a centralized computing module, an energy management module, and a state detection and signal output module. Further, the domain controller 110 in embodiments of this application may perform preprocessing, such as signal amplification and filtering, on the first vehicle information and the second vehicle information respectively acquired by the information acquisition unit 120 and the second controlled units 140, to ensure proper subsequent use of the vehicle information. In addition, the domain controller 110 may further receive a message in a vehicle network, such as a CAN-FD, to determine an execution status of each controlled unit.

Further, when the domain controller 110 simultaneously receives a plurality of pieces of vehicle information, for example, simultaneously receives accelerator pedal position information and brake pedal position information, the domain controller 110 may preferentially determine corresponding torque control information and first control signal via the data arbitration module based on the brake pedal position information, corresponding wheel speed information, and the like, to ensure prioritized execution of vehicle braking. Optionally, in some embodiments, processing priorities for different vehicle information are configured in the data arbitration module. Consequently, the domain controller 110 may sequentially process the simultaneously received vehicle information according to the processing priorities configured in the data arbitration module.

After determining to-be-processed vehicle information via the data arbitration module, the domain controller 110 may perform functions such as current operating mode determination, current vehicle speed determination, torque calculation, current steering information determination, status monitoring, and the like via the centralized computing module.

Current operating mode determination may be determining based on inputs of a gear message and/or a control message in the vehicle network, to obtain a current operating mode of the vehicle, such as an eco mode or a sport mode.

During the execution of current vehicle speed determination, the current vehicle speed and the slip ratio may be calculated based on the wheel speed acquired by the wheel speed sensor. In addition, a vehicle acceleration state, the vehicle deviation information, and the like may be further calculated based on information transmitted by information acquisition units 120 such as the acceleration sensor, the yaw angle sensor, and the like.

During torque calculation, the corresponding driving torque or braking torque may be calculated based on the accelerator pedal position or the brake pedal position.

During steering calculation, a driver-demanded steering torque, steering speed, steering acceleration, steering angle, and the like may be calculated based on information acquired by the torque and angle sensor.

After completing the corresponding calculations via the centralized computing module, the domain controller 110 may determine, based on a calculation result, whether a regenerative torque needs to be involved in vehicle control. If the regenerative torque needs to be involved in vehicle control, whether energy regeneration is required for the vehicle battery at the current moment is determined via the energy management module. That is, the energy management module determines, based on a current battery power, the previously calculated current vehicle speed, a previously detected driving state of the motor, the previously calculated driving torque or braking torque, and a preconfigured decision-making algorithm, whether energy regeneration can be performed for the vehicle battery. If energy regeneration can be performed for the vehicle battery, a corresponding regenerative torque value is output.

When the domain controller 110 determines the braking torque, the driving torque, and the regenerative torque via the centralized computing module and the energy management module, the domain controller 110 may, via the state detection and signal output module, generate corresponding torque control information and first control signal based on the determined torques, broadcast the first control signal in the vehicle network, and sending the first control signal to each first controlled unit 130 in the vehicle network. In addition, an operating state of each first controlled unit 130 is detected via the state detection and signal output module, or an operating state of the first controlled unit 130 is obtained by receiving operation feedback information of the first controlled unit 130.

An embodiment of this application further provides a control system for a vehicle, including the foregoing domain controller 110.

An embodiment of this application further provides a vehicle, including a vehicle body. The vehicle body is provided with the foregoing domain controller 110, or the foregoing control system for a vehicle.

This application further provides a computer-readable storage medium, storing a computer program. When the computer program is executed by one or more processors, the foregoing control method for a vehicle is performed.

In the description of this specification, the description with reference to the terms "specifically", "further", "in particular", "can be understood", and the like means that specific features, structures, materials, or characteristics described with reference to embodiments or examples are included in at least one embodiment or example of this application. In this specification, the illustrative descriptions of the foregoing terms do not necessarily refer to the same embodiment or example. Furthermore, the specific features, structures, materials, or characteristics may be combined in a proper manner in any one or more of embodiments or examples. In addition, a person skilled in the art may combine different embodiments or examples described in this specification and features of different embodiments or examples in a case of no conflict.

Any process or method description in the flowchart or otherwise described herein may be understood as representing a module, segment, or portion of code, which includes one or more executable instructions for implementing a specific logical function or step of a process, and the scope of preferred embodiments of this application includes additional implementations in which functions may be executed out of the order shown or discussed, including in a substantially simultaneous manner or in a reverse order depending on the functions involved, as should be understood by a person skilled in the art to which embodiments of this application pertain.

Although embodiments of this application have been shown and described above, it may be understood that the foregoing embodiments are examples and cannot be construed as a limitation on this application. A person of ordinary skill in the art may change, modify, replace and vary the foregoing embodiments within the scope of this application.

## Claims

1. A domain controller, used in a vehicle, wherein the domain controller is connected to an information acquisition unit of the vehicle, and the domain controller is connected to a plurality of first controlled units of the vehicle; and
the domain controller is configured to: determine a first control signal based on first vehicle information acquired by the information acquisition unit, and send the first control signal to the plurality of first controlled units, wherein the first control signal instructs the plurality of first controlled units to perform corresponding operations.

2. The domain controller according to claim 1, wherein the domain controller is connected to a plurality of second controlled units of the vehicle; and
the domain controller is configured to: determine a second control signal based on second vehicle information acquired by the plurality of second controlled units, and send the second control signal to the plurality of second controlled units, wherein the second control signal instructs the plurality of second controlled units to perform corresponding operations.

3. The domain controller according to claim 1, wherein the first control signal comprises torque control information.

4. The domain controller according to claim 3, wherein the first vehicle information comprises current accelerator pedal position information, current operating mode information, current vehicle speed information, and current vehicle gear information; and the domain controller is configured to determine the torque control information based on the current accelerator pedal position information, the current operating mode information, the current vehicle speed information, and the current vehicle gear information, to obtain the first control signal.

5. The domain controller according to claim 4, wherein the domain controller is configured to determine the torque control information based on the current accelerator pedal position information, the current vehicle speed information, the current vehicle gear information, and a target mapping relationship, wherein the target torque mapping information is determined based on the current operating mode information and predetermined torque mapping information corresponding to each operating mode, and the torque mapping information comprises a torque, and an accelerator pedal, a vehicle speed, and a vehicle gear torque that correspond to the torque.

6. The domain controller according to any one of claims 3 to 5, wherein the first vehicle information comprises current brake pedal position information, and the domain controller is configured to determine the torque control information based on a target braking torque, wherein the target braking torque is determined based on the current brake pedal position information.

7. The domain controller according to claim 6, wherein the first vehicle information comprises current battery state information and current drive motor state information, and the domain controller is configured to:
determine the torque control information based on the target braking torque and a current maximum braking torque, wherein the current maximum braking torque is determined based on the current battery state information and the current drive motor state information.

8. The domain controller according to claim 7, wherein the first vehicle information comprises the current vehicle speed information, and the domain controller is configured to:
determine the torque control information based on the target braking torque, the current maximum braking torque, and a regenerative torque, wherein the regenerative torque is determined based on the current battery state information, the current drive motor state information, and the current vehicle speed information.

9. The domain controller according to any one of claims 3 to 8, wherein the first vehicle information comprises current wheel speed information, and the domain controller is configured to determine the torque control information based on current slip information, wherein the current slip information is determined based on the current wheel speed information and vehicle speed information corresponding to the current wheel speed information.

10. The domain controller according to claim 9, wherein the torque control information comprises torque reduction information, the plurality of first controlled units comprise a drive motor, the first vehicle information comprises a currently generated torque of the drive motor, and the domain controller is configured to: when the current slip information is that a vehicle slip ratio is higher than a preset value, determine torque reduction information of the drive motor based on the currently generated torque and the current slip information, to obtain the torque control information, wherein the drive motor is configured to reduce the currently generated torque based on the torque reduction information when the torque reduction information in the first control signal is obtained.

11. The domain controller according to any one of claims 3 to 8, wherein the first vehicle information comprises current vehicle steering information, and the domain controller is configured to determine the torque control information based on a vehicle steering angle, a vehicle steering torque, and a vehicle steering speed, wherein the vehicle steering angle, the vehicle steering torque, and the vehicle steering speed are determined based on the current vehicle steering information.

12. The domain controller according to claim 11, wherein the torque control information comprises torque adjustment information; the first vehicle information comprises current wheel speed information, vehicle acceleration information, vehicle yaw angle information, and a currently generated torque of a drive motor; and the domain controller is configured to determine the torque adjustment information based on the vehicle steering angle, the vehicle steering torque, the vehicle steering speed, current slip information, current vehicle speed information, vehicle deviation information, and the currently generated torque, to obtain the torque control information, wherein the current slip information is determined based on the current wheel speed information, the vehicle deviation information is determined based on the vehicle acceleration information and the vehicle yaw angle information, and the drive motor is configured to: when the torque adjustment information in the first control signal is obtained, perform braking based on the torque adjustment information to align a forward direction of the vehicle with the vehicle steering angle.

13. A control method for a vehicle, wherein the vehicle is provided with the domain controller according to any one of claims 1 to 12, and the method comprises:
determining a first control signal based on first vehicle information acquired by the information acquisition unit; and
sending the first control signal to the plurality of first controlled units, wherein the first control signal instructs the plurality of first controlled units to perform corresponding operations.

14. The method according to claim 13, wherein the domain controller is connected to a plurality of second controlled units of the vehicle, and the method further comprises:
determining a second control signal based on second vehicle information acquired by the plurality of second controlled units; and
sending the second control signal to the plurality of second controlled units, wherein the second control signal instructs the plurality of second controlled units to perform corresponding operations.

15. The method according to claim 13 or 14, wherein the first control signal comprises torque control information.

16. The method according to claim 15, wherein the first vehicle information comprises current accelerator pedal position information, current operating mode information, current vehicle speed information, and current vehicle gear information; and determining the first control signal based on the first vehicle information acquired by the information acquisition unit comprises:
determining the torque control information based on the current accelerator pedal position information, the current operating mode information, the current vehicle speed information, and the current vehicle gear information.

17. The method according to claim 16, wherein determining the torque control information based on the current accelerator pedal position information, the current operating mode information, the current vehicle speed information, and the current vehicle gear information comprises:
determining the torque control information based on the current accelerator pedal position information, the current vehicle speed information, the current vehicle gear information, and a target mapping relationship, wherein the target torque mapping information is determined based on the current operating mode information and predetermined torque mapping information corresponding to each operating mode, and the torque mapping information comprises a torque, and an accelerator pedal, a vehicle speed, and a vehicle gear torque that correspond to the torque.

18. The method according to any one of claims 15 to 17, wherein the first vehicle information comprises current brake pedal position information, and the method further comprises:
determining the torque control information based on a target braking torque, wherein the target braking torque is determined based on the current brake pedal position information.

19. The method according to claim 18, wherein the first vehicle information comprises current battery state information and current drive motor state information, and determining the torque control information based on the target braking torque comprises:
determining the torque control information based on the target braking torque and a current maximum braking torque, wherein the current maximum braking torque is determined based on the current battery state information and the current drive motor state information.

20. The method according to claim 19, wherein the first vehicle information comprises the current vehicle speed information, and determining the torque control information based on the target braking torque and the current maximum braking torque comprises:
determining the torque control information based on the target braking torque, the current maximum braking torque, and a regenerative torque, wherein the regenerative torque is determined based on the current battery state information, the current drive motor state information, and the current vehicle speed information.

21. The method according to any one of claims 15 to 20, wherein the first vehicle information comprises current wheel speed information, and the method further comprises:
determining the torque control information based on current slip information, wherein the current slip information is determined based on the current wheel speed information and vehicle speed information corresponding to the current wheel speed information.

22. The method according to claim 21, wherein the torque control information comprises torque reduction information, the plurality of first controlled units comprise a drive motor, the first vehicle information comprises a currently generated torque of the drive motor, and determining the torque control information based on the current slip information comprises:
when the current slip information is that a vehicle slip ratio is higher than a preset value, determining torque reduction information of the drive motor based on the currently generated torque and the current slip information, to obtain the torque control information, wherein the drive motor is configured to reduce the currently generated torque based on the torque reduction information when the torque reduction information in the first control signal is obtained.

23. The method according to any one of claims 15 to 17, wherein the first vehicle information comprises current vehicle steering information, and the method further comprises:
determining the torque control information based on a vehicle steering angle, a vehicle steering torque, and a vehicle steering speed, wherein the vehicle steering angle, the vehicle steering torque, and the vehicle steering speed are determined based on the current vehicle steering information.

24. The method according to claim 23, wherein the torque control information comprises torque adjustment information; the first vehicle information comprises current wheel speed information, vehicle acceleration information, vehicle yaw angle information, and a currently generated torque of a drive motor; and determining the torque control information based on the vehicle steering angle, the vehicle steering torque, and the vehicle steering speed comprises:
determining the torque adjustment information based on the vehicle steering angle, the vehicle steering torque, the vehicle steering speed, current slip information, current vehicle speed information, vehicle deviation information, and the currently generated torque, to obtain the torque control information, wherein the current slip information is determined based on the current wheel speed information, the vehicle deviation information is determined based on the vehicle acceleration information and the vehicle yaw angle information, and the drive motor is configured to: when the torque adjustment information in the first control signal is obtained, perform braking based on the torque adjustment information to align a forward direction of the vehicle with the vehicle steering angle.

25. A control system for a vehicle, comprising the domain controller according to any one of claims 1 to 12.

26. A vehicle, comprising a vehicle body, wherein
the vehicle body is provided with the domain controller according to any one of claims 1 to 12, or the control system for a vehicle according to claim 25.

27. A vehicle, comprising a memory and a processor, wherein the memory stores a computer program, and when the computer program is executed by the processor, the method according to any one of claims 13 to 24 is performed.

28. A computer-readable storage medium, wherein the computer-readable storage medium stores a computer program, and when the computer program is executed by one or more processors, the method according to any one of claims 13 to 24 is performed.
